# EUROPÄISCHE PATENTANMELDUNG

(11) **EP 3 357 620 A1**
(43) Veröffentlichungstag der Anmeldung: **08.08.2018**
(21) Anmeldenummer: 17154319.2
(22) Anmeldetag: 02.02.2017
(51) Int. Cl.: B23K 1/00, B23K 1/06, B23K 20/00, B23K 20/10, H01R 43/02, B23K 101/38, B23K 103/10

(54) **VERFAHREN UND VORRICHTUNG ZUM ULTRASCHALLVERBINDEN VON FÜGEPARTNERN, INSBESONDERE ELEKTRISCHEN LEITERN**

(71) Anmelder: Telsonic Holding AG, 9552 Bronschhofen (CH)
(72) Erfinder: Hünig, Thomas, 63868 Grosswallstadt (DE)
(74) Vertreter: Hepp Wenger Ryffel AG

(57) **Zusammenfassung**

Die Erfindung betrifft ein Verfahren zum Ultraschallverbinden, insbesondere Ultraschallschweissen und/oder Ultraschalllöten, von Fügepartnern (20, 21), insbesondere elektrischen Leitern (20, 21), enthaltend die Schritte a) a)in einem Zeitraum von einem ersten Zeitpunkt (t₁) bis zu einem zweiten Zeitpunkt (t₂): Beaufschlagen mindestens eines der Fügepartner (20, 21) mit Ultraschall mittels einer mit dem Fügepartner (20, 21) in Kontakt befindlichen Sonotrode (11) derart, dass die Fügepartner (20, 21) verbunden werden; b) Separieren der Sonotrode (11) von den Fügepartnern (20, 21), wobei die Sonotrode (11) zu einem dritten Zeitpunkt (t₃) ausser Kontakt mit den Fügepartner (20, 21) gerät. Dabei wird zumindest in einem Zeitraum vom ersten Zeitpunkt (t₁) bis zum dritten Zeitpunkt (t₃) durchgängig Ultraschall in die Sonotrode (11) eingeleitet. Weiterhin betrifft die Erfindung eine Vorrichtung (10) zum Ultraschallverbinden von Fügepartnern (20, 21), insbesondere elektrischen Leitern (20, 21) und ein Verfahren zum Nachrüsten einer bestehenden Vorrichtung zum Ultraschallverbinden von Fügepartnern (20, 21), insbesondere elektrischen Leitern (20, 21).

## Beschreibung

Die vorliegende Erfindung befasst sich mit Verfahren und Vorrichtung zum Ultraschallverbinden, insbesondere Ultraschallschweissen und/oder Ultraschalllöten, von Fügepartnern, insbesondere elektrischen Leitern, beispielsweise Litzen, insbesondere aus Aluminium.

Beim Ultraschallschweissen elektrischer Leiter, insbesondere aus Aluminium, besteht häufig das Problem, dass sich das verdichtete Material des Leiters an einem Schweisswerkzeug festsetzt, wie beispielsweise an einer Sonotrode. Dieses Problem besteht besonders dann, wenn das Schweisswerkzeug ein Profil aufweist, beispielweise in Form von Rillen oder Verzahnungen. Problematisch sind dieser Hinsicht Leiter aus Kupfer, aber vor allem Leiter aus Aluminium, da dessen sogenanntes Kaltfliessverhalten grösser ist. Die Anhaftungskraft der Materialien am Schweisswerkzeug ist nach dem Schweissvorgang derart gross, dass besondere Massnahmen ergriffen werden müssen, um die Leiter von den Schweisswerkzeugen zu lösen. Dabei muss besonderes Augenmerk darauf gelegt werden, dass die Leiter und die Schweissung selbst nicht beschädigt werden.

Üblicherweise wird nach der Erreichung vorgegebener Schweissparameter der Ultraschall abgeschaltet. Anschliessend folgt eine optionale Haltezeit, in der der mindestens eine Leiter weiterhin zwischen den Schweisswerkzeugen gehalten wird und in der er abkühlen kann. Dann erfolgt ein durch eine Maschinensteuerung angeregter sogenannter Ultraschall-"Abschüttelimpuls" in die Sonotrode, der die Anhaftung des Leiters an dem/den Schweisswerkzeug(en) lösen soll.

Nachteilig an diesen bekannten Verfahren ist jedoch, dass der Abschüttelimpuls bei falscher Parametrierung im falschen Moment den mindestens einen geschweissten Leiter oder die Schweissung selbst beschädigen kann. Dies kann etwa passieren, wenn die Sonotrode noch mit Kraft auf die Leiter gepresst wird und der Abschüttelimpuls erfolgt. In diesen Fällen kann es unter Umständen sogar vorkommen, dass die Schweissung unbrauchbar wird. Ist eine Haltezeit nötig, wird hierdurch zudem die Zykluszeit verlängert.

Es gibt auch Ansätze, durch besondere Oberflächenvergütungen die Anhaftungskraft zu reduzieren. Derartige Oberflächenvergütungen sind jedoch häufig teuer und daher unwirtschaftlich.

Weiterhin wurde beobachtet, dass bei manchen Verfahren zum Ultraschallschweissen elektrischer Leiter die Ultraschallkonverter einen hohen Verschleiss aufweisen, wofür jedoch bisher nicht immer zufriedenstellende Erklärung oder gar eine Lösung gefunden werden konnte. Dies kann dem erneuten Anschwingen der Sonotrode im anhaftenden Leiter geschuldet sein.

Es ist daher eine Aufgabe der vorliegenden Erfindung, ein Verfahren und eine Vorrichtung zum Ultraschallverbinden, insbesondere Ultraschallschweissen und/oder Ultraschalllöten, von Fügepartnern, insbesondere elektrischen Leitern bereitzustellen, durch die zumindest ein oder sogar mehrere der genannten Nachteile überwunden werden können. Insbesondere soll das Verfahren eine möglichst kurze Zykluszeit erlauben und wirtschaftlich sein, ohne dass jedoch die Qualität der insbesondere geschweissten Verbindung aufgrund von Anhaftungen mindestens eines der Fügepartner an einem Verbindungswerkzeug, beispielsweise an einem Schweisswerkzeug, verringert wird.

Diese und weitere Aufgaben werden in einem ersten Aspekt der Erfindung gelöst durch ein Verfahren zum Ultraschallverbinden, insbesondere Ultraschallschweissen und/oder Ultraschalllöten, von Fügepartnern, insbesondere elektrischen Leitern, welches die folgenden Schritte enthält:
a) in einem Zeitraum von einem ersten Zeitpunkt t₁ bis zu einem zweiten Zeitpunkt t₂: Beaufschlagen mindestens eines der Fügepartner mit Ultraschall mittels einer mit dem Fügepartnerin Kontakt befindlichen Sonotrode derart, dass die Fügepartner verschweisst werden;
b) Separieren der Sonotrode von den Fügepartnern, wobei die Sonotrode zu einem dritten Zeitpunkt t₃ ausser Kontakt mit den Fügepartner gerät.

Unter einem Separieren der Sonotrode wird hier verstanden, dass die Sonotrode ausser Kontakt mit dem Fügepartner gebracht wird. Dies kann durch eine Bewegung der Sonotrode bei unbewegtem Fügepartner, eine Bewegung des Fügepartners bei unbewegter Sonotrode und eine kombinierte Bewegung von Sonotrode und Fügepartner verstanden, bei der sich die relative Position von Sonotrode und Fügepartner ändert. Eine Bewegung eines Ambosses zusammen mit den daran gehaltenen Fügepartnern wird beispielsweise bei den von der Anmelderin vertriebenen Schweissmaschinen vom Typ "TelsoSplice" durchgeführt.

Wenn ein vorgegebenes Kriterium, insbesondere ein Ultraschallschweisskriterium, erfüllt ist, können Schritt a) beendet und Schritt b) eingeleitet werden. Das Kriterium kann beispielsweise sein, dass eine vorgegebene in die Sonotrode eingeleitete maximale Ultraschallenergie, eine vorgegebene in die Sonotrode eingeleitete maximale Ultraschallleistung, ein vorgegebener Weg, den die Sonotrode relativ zum Fügepartner zurückgelegt hat, oder eine vorgegebene Zeit erreicht wurde.

Gemäss der Erfindung wird zumindest in einem Zeitraum vom ersten Zeitpunkt t₁ bis zum dritten Zeitpunkt t₃ durchgängig Ultraschall in die Sonotrode eingeleitet. Mit anderen Worten wird mindestens so lange Ultraschall in die Sonotrode eingeleitet, wie sie in Kontakt mit mindestens einem der Fügepartner ist.

Im Gegensatz zu dem aus dem Stand der Technik bekannten Abschüttelimpuls wird die in die Sonotrode eingeleitete Ultraschallleistung auch nach dem Erreichen eines vorgegebenen Kriteriums bis zum Separieren der Sonotrode von dem mindestens einen Fügepartner nicht auf null reduziert. Bevorzugt verbleibt die Ultraschallleistung während dieser Zeit oberhalb eines vorgegebenen minimalen positiven Wertes, der von der jeweiligen Anwendung abhängen kann. Erst nach dem Separieren der Sonotrode vom Fügepartner kann die in die Sonotrode eingeleitete Ultraschallleistung optional wieder auf null reduziert werden.

Ohne dass die Erfindung auf diese Erklärung zu beschränken wäre, wird derzeit vermutet, dass jedenfalls im Falle eines aus Aluminium bestehenden elektrischen Leiters durch einen bisher eingesetzten Abschüttelimpuls der Verbindungsvorgang zwischenzeitlich abgebrochen wird und das kriechende Aluminium zur Gänze erstarrt. Gegen diesen soliden Aluminiumblock, der mit den Verbindungswerkzeugen, insbesondere Schweisswerkzeugen, bereits eine feste akustische Einheit gebildet hat, schwingt der Abschüttelimpuls dann an. Die Folge sind Biegeschwingungen, die die Ultraschallkonverter unter Umständen langfristig zerstören könnten. Weiterhin wird derzeit vermutet, dass beim erfindungsgemässen Verfahren das kriechende Aluminium hingegen in einem beweglichen Zustand gehalten wird; es entfällt das harte "Wiederanschwingen" gegen die erstarrte Masse insgesamt.

Durch den Verzicht auf einen Abschüttelimpuls kann in einem breiteren Rahmen vermieden werden, dass der Abschüttelimpuls bei falscher Parametrierung im falschen Moment die verbundenen Fügepartner oder die Schweissung selbst beschädigen kann. Zudem kann in vielen Fällen auf eine Haltezeit verzichtet werden, wodurch die Zykluszeit verkürzt werden kann. Besonders vorteilhaft ist, dass keine Änderungen an Bauteilen oder zusätzliche Bauteile der Verbindungsvorrichtung, insbesondere der Schweissvorrichtung, benötigt werden und insbesondere keine Verbindungswerkzeug-Geometrien, insbesondere Schweisswerkzeug-Geometrien, angepasst oder aufwendige Oberflächenvergütungen gegebenenfalls vorgesehen werden müssen. Die erfindungsgemässe Lösung benötigt lediglich ein anderes Verfahren, das beispielsweise durch einen angepassten Maschinensteuerungsablauf realisiert werden kann.

Wie sich in Versuchen gezeigt hat, können durch das erfindungsgemässe Verfahren trotzdem Anhaftungen von insbesondere Aluminium an den Verbindungswerkzeugen, insbesondere Schweisswerkzeugen, wirkungsvoll verhindert werden.

In einigen Ausführungsbeispielen kann die Sonotrode während einer Haltezeit zwischen den Schritten a) und b) mit einer Haltekraft an den Fügepartner gedrückt werden. Gemäss der Erfindung wird aber auch während dieser Haltezeit Ultraschall in die Sonotrode eingeleitet. Insbesondere kann die in die Sonotrode eingeleitete Ultraschallleistung oberhalb eines oben beschriebenen vorgegebenen minimalen positiven Wertes gehalten werden. Mit anderen Worten wird mindestens so lange Ultraschall in die Sonotrode eingeleitet, wie die Sonotrode an den Fügepartner gedrückt wird.

Mindestens einer der Fügepartner kann ein elektrischer Leiter sein, wie beispielsweise eine Litze.

Das erfindungsgemässe Verfahren ist vorteilhaft für sämtliche Fügepartner, die zu Anhaftungen an Verbindungswerkzeugen, insbesondere Schweisswerkzeugen, neigen, wie beispielsweise Leiter aus Kupfer. Besonders ausgeprägt ist der erfindungsgemässe Effekt, wenn der Leiter, insbesondere die Litze, aus Aluminium besteht.

In an sich bekannter Weise kann die Sonotrode zu Längsschwingungen oder torsionalen Schwingungen angeregt werden.

In einem zweiten Aspekt betrifft die Erfindung eine Vorrichtung zum Ultraschallverbinden, insbesondere Ultraschallschweissen und/oder Ultraschalllöten, von Fügepartnern, insbesondere elektrischen Leitern. Die Vorrichtung enthält
- eine zu Ultraschallschwingungen anregbare Sonotrode, welche mit mindestens einem der Fügepartner in Kontakt bringbar ist und mittels deren der Fügepartner derart mit Ultraschall beaufschlagbar ist, dass die Fügepartner verbunden werden;
- Antriebsmittel zum Bewegen der Sonotrode relativ zum Fügepartner.

Die Antriebsmittel können beispielsweise einen Vorschubzylinder enthalten. Unter einer Bewegung der Sonotrode relativ zum Fügepartner werden hier und im Folgenden eine Bewegung der Sonotrode bei unbewegtem Fügepartner, eine Bewegung des Fügepartners bei unbewegter Sonotrode und eine kombinierte Bewegung von Sonotrode und Fügepartner verstanden, bei der sich die relative Position von Sonotrode und Fügepartner ändert. So können die Antriebsmittel beispielsweise auch zum Bewegen eines Ambosses und eines daran befestigten Fügepartners ausgebildet sein, während die Sonotrode unbeweglich ist.

Die erfindungsgemässe Vorrichtung enthält weiterhin eine Steuerung, mittels deren der in die Sonotrode eingeleitete Ultraschall und/oder die Antriebsmittel zur Durchführung eines wie oben beschriebenen Verfahrens steuerbar sind. Mit dieser Vorrichtung können die bereits oben erläuterten Vorteile erzielt werden.

Die Sonotrode kann derart ausgebildet und angeordnet sein, dass sie zu Längsschwingungen und/oder zu torsionalen Schwingungen anregbar ist.

Ein dritter Aspekt der Erfindung betrifft ein Verfahren zum Nachrüsten einer bestehenden Vorrichtung zum Ultraschallverbinden, insbesondere Ultraschallschweissen, von Fügepartnern, insbesondere elektrischen Leitern, wobei die bestehende Vorrichtung enthält:
- eine zu Ultraschallschwingungen anregbare Sonotrode, welche mit mindestens einem der Fügepartner in Kontakt bringbar ist und mittels deren der Fügepartner derart mit Ultraschall beaufschlagbar ist, dass die Fügepartner verbunden werden;
- Antriebsmittel zum Bewegen der Sonotrode relativ zum Fügepartner.

Wie oben bereits erläutert wurde, werden unter einer Bewegung der Sonotrode relativ zum Fügepartner eine Bewegung der Sonotrode bei unbewegtem Fügepartner, eine Bewegung des Fügepartners bei unbewegter Sonotrode und eine kombinierte Bewegung von Sonotrode und Fügepartner verstanden, bei der sich die relative Position von Sonotrode und Fügepartner ändert.

Das Verfahren enthält einen Schritt, in dem die bestehende Vorrichtung mit einer Steuerung versehen wird, mittels deren der in die Sonotrode eingeleitete Ultraschall und/oder die Antriebsmittel zur Durchführung eines erfindungsgemässen Verfahrens steuerbar sind. Die Steuerung kann in die Vorrichtung integriert werden oder durch eine Relaissteuerung realisiert werden.

Nachfolgend wird die Erfindung anhand eines Ausführungsbeispiels näher erläutert. Dabei zeigen
- Figur 1:: eine schematische Darstellung einer erfindungsgemässen Vorrichtung zum Ultraschallschweissen elektrischer Leiter;
- Figur 2:: ein Diagramm, welches schematisch einen beispielhaften zeitlichen Verlauf der in eine Sonotrode der Vorrichtung eingeleiteten Ultraschallleistung zeigt.

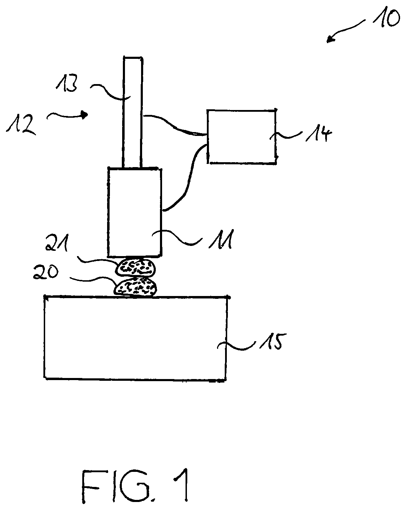

Die in Figur 1 schematisch dargestellte Vorrichtung 10 zum Ultraschallschweissen enthält eine Sonotrode 11 und einen Amboss 15, zwischen denen beispielsweise zwei elektrische Leiter 20, 21 positioniert werden können, wie etwa zwei Aluminium-Litzen 20, 21. Die Sonotrode 11 kann mithilfe von Antriebsmitteln 12, die einen Vorschubzylinder 13 enthalten, in Richtung des Ambosses 15 und damit relativ zu den Litzen 20, 21 bewegt werden. Alternativ oder zusätzlich könnten auch Antriebsmittel vorhanden sein, mit denen der Amboss 15 und die Litzen 20, 21 in Richtung der Sonotrode 11 bewegt werden könnten.

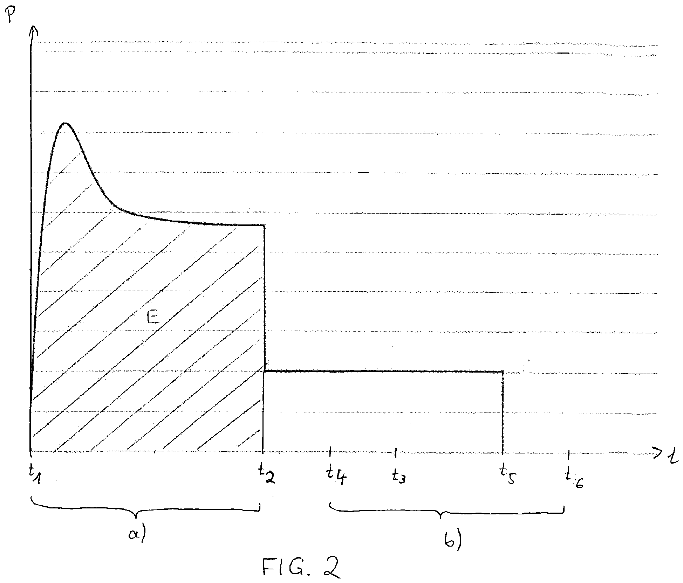

In einem erfindungsgemässen Verfahren werden die Litzen 20, 21 in einen zwischen der Sonotrode 11 und dem Amboss 15 gebildeten Zwischenraum eingelegt. Anschliessend wird die Sonotrode 11 mittels des von einer Steuerung 14 gesteuerten Vorschubzylinders 11 in Kontakt mit der oberen Litze 21 gebracht. In einem Schritt a), der zu einem ersten Zeitpunkt t₁ beginnt, wird dann auf an sich bekannte Weise mittels der Sonotrode 11 die obere Litze 21 derart mit Ultraschall beaufschlagt, dass die Litzen 20, 21 miteinander verschweisst werden. Wie in Figur 2 erkennbar ist, folgt die in die Sonotrode 11 eingeleitete Ultraschallleistung P einem von der Steuerung 14 gesteuerten Verlauf.

Wenn ein vorgegebenes Ultraschallschweisskriterien erfüllt ist (in diesem Ausführungsbeispiel: wenn eine vorgegebene in die Sonotrode eingeleitete maximale Ultraschallenergie E erreicht wurde), wird Schritt a) zu einem zweiten Zeitpunkt t₂ > t₁ beendet. Vom zweiten Zeitpunkt t₂ bis zu einem späteren fünften Zeitpunkt t₅ > t₂ wird weiterhin Ultraschall in die Sonotrode 11 eingeleitet, jedoch mit einer geringeren Ultraschallleistung P als zum Ende des Schritts a). Zu einem vierten Zeitpunkt t₄ mit t₂ < t₄ < t₅ wird von der Steuerung 14 ein Schritt b) eingeleitet, in dem die Sonotrode 11 mit Hilfe des Vorschubzylinders 13 von der oberen Litze 21 separiert wird. Zu einem dritten Zeitpunkt t₃ mit t₄ < t₃ < t₅ gerät die Sonotrode 11 ausser Kontakt mit den Litzen 20, 21. In dem in Figur 2 dargestellten Beispiel endet Schritt b) zu einem sechsten Zeitpunkt t₆ > t₅. Es ist jedoch auch denkbar und von der Erfindung erfasst, dass t₆ = t₅ oder t₃ < t₆ < t₅.

Bei Bedarf kann alternativ die Sonotrode 11 während einer Haltezeit zwischen den Schritten a) und b) mit einer Haltekraft an die Litzen 20, 21 gedrückt werden. Auch während dieser Haltezeit kann die in die Sonotrode 11 eingeleitete Ultraschallleistung P oberhalb eines wie oben beschriebenen minimalen Wertes gehalten werden.

## Patentansprüche

1. Verfahren zum Ultraschallverbinden, insbesondere Ultraschallschweissen und/oder Ultraschalllöten, von Fügepartnern (20, 21), insbesondere elektrischen Leitern (20, 21), enthaltend die Schritte
a) in einem Zeitraum von einem ersten Zeitpunkt (t₁) bis zu einem zweiten Zeitpunkt (t₂): Beaufschlagen mindestens eines der Fügepartner (20, 21) mit Ultraschall mittels einer mit dem Fügepartner (20, 21) in Kontakt befindlichen Sonotrode (11) derart, dass die Fügepartner (20, 21) verbunden werden;
b) Separieren der Sonotrode (11) von den Fügepartnern (20, 21), wobei die Sonotrode (11) zu einem dritten Zeitpunkt (t₃) ausser Kontakt mit den Fügepartner (20, 21) gerät;
**dadurch gekennzeichnet, dass**
zumindest in einem Zeitraum vom ersten Zeitpunkt (t₁) bis zum dritten Zeitpunkt (t₃) durchgängig Ultraschall in die Sonotrode (11) eingeleitet wird.

2. Verfahren gemäss Anspruch 1,
**dadurch gekennzeichnet, dass**
die Sonotrode (11) während einer Haltezeit zwischen den Schritten a) und b) mit einer Haltekraft an den Fügepartner (20, 21) gedrückt wird.

3. Verfahren gemäss einem der vorangehenden Ansprüche,
**dadurch gekennzeichnet, dass**
mindestens einer der Fügepartner (20, 21) ein elektrischer Leiter (20, 21), insbesondere eine Litze (20, 21) ist.

4. Verfahren gemäss einem der vorangehenden Ansprüche,
**dadurch gekennzeichnet, dass**
mindestens einer der Fügepartner (20, 21) aus Aluminium besteht.

5. Verfahren gemäss einem der vorangehenden Ansprüche,
**dadurch gekennzeichnet, dass**
die Sonotrode (11) zu Längsschwingungen angeregt wird.

6. Verfahren gemäss einem der vorangehenden Ansprüche,
**dadurch gekennzeichnet, dass**
die Sonotrode (11) zu torsionalen Schwingungen angeregt wird.

7. Vorrichtung (10) zum Ultraschallverbinden, insbesondere Ultraschallschweissen und/ oder Ultraschalllöten, von Fügepartnern (20, 21), insbesondere elektrischen Leitern (20, 21), enthaltend
- eine zu Ultraschallschwingungen anregbare Sonotrode (11), welche mit mindestens einem der Fügepartner (20, 21) in Kontakt bringbar ist und mittels deren der Fügepartner (20, 21) derart mit Ultraschall beaufschlagbar ist, dass die Fügepartner (20, 21) verbunden werden;
- Antriebsmittel (12) zum Bewegen der Sonotrode (11) relativ zum Fügepartner (20, 21);
**gekennzeichnet durch**
eine Steuerung (14), mittels deren der in die Sonotrode (11) eingeleitete Ultraschall und/oder die Antriebsmittel (12) zur Durchführung eines Verfahrens gemäss einem der vorangehenden Ansprüche steuerbar sind.

8. Vorrichtung (10) gemäss Anspruch 7,
**dadurch gekennzeichnet, dass**
die Sonotrode (11) derart ausgebildet und angeordnet ist, dass sie zu Längsschwingungen anregbar ist.

9. Vorrichtung (10) gemäss einem der Ansprüche 7 und 8,
**dadurch gekennzeichnet, dass**
die Sonotrode (11) derart ausgebildet und angeordnet ist, dass sie zu torsionalen Schwingungen anregbar ist.

10. Verfahren zum Nachrüsten einer bestehenden Vorrichtung zum Ultraschallverbinden, insbesondere Ultraschallschweissen und/oder Ultraschalllöten, von Fügepartnern (20, 21), insbesondere elektrischen Leitern (20, 21), wobei die bestehende Vorrichtung enthält:
- eine zu Ultraschallschwingungen anregbare Sonotrode (11), welche mit mindestens einem der Fügepartner (20, 21) in Kontakt bringbar ist und mittels deren der Fügepartner (20, 21) derart mit Ultraschall beaufschlagbar ist, dass die Fügepartner (20, 21) verbunden werden;
- Antriebsmittel (12) zum Bewegen der Sonotrode (11) relativ zum Fügepartner (20, 21);
wobei das Verfahren einen Schritt enthält, in dem die bestehende Vorrichtung mit einer Steuerung (14) versehen wird, mittels deren der in die Sonotrode (11) eingeleitete Ultraschall und/oder die Antriebsmittel (12) zur Durchführung eines Verfahrens gemäss einem der Ansprüche 1 bis 6 steuerbar sind.
